(19) Europäisches Patentamt
European Patent Office
Office européen des brevets

(11) EP 1 052 230 A1

# (12) EUROPEAN PATENT APPLICATION

(43) Date of publication:
**15.11.2000 Bulletin 2000/46**

(51) Int. Cl.[7]: **C03C 17/00**

(21) Application number: **00108471.4**

(22) Date of filing: **18.04.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **19.04.1999 JP 11025399**

(71) Applicant:
**TOYO INK MANUFACTURING CO., LTD.**
**Tokyo (JP)**

(72) Inventors:
- **Oizumi, Tetsuro,**
  **Toyo Ink Manuf., Co., Ltd.**
  **Tokyo (JP)**
- **Hirota, Naohisa,**
  **Toyo Ink Manuf., Co., Ltd.**
  **Tokyo (JP)**
- **Hashimoto, Toshiyuki,**
  **Toyo Ink Manuf., Co., Ltd.**
  **Tokyo (JP)**
- **Sato, Shinichi,**
  **Toyo Ink Manuf., Co., Ltd.**
  **Tokyo (JP)**

(74) Representative:
**Koepe, Gerd L., Dipl.-Chem.**
**Blumbach, Kramer & Partner GbR,**
**Patentanwälte,**
**Radeckestrasse 43**
**81245 München (DE)**

## (54) Coating composition for coloring glass

(57) A coating composition for coloring glass, comprising a green colorant formed by color-mixing a blue organic pigment and a yellow organic pigment, a silicon alkoxide compound or a metal alkoxide compound, and an organic resin.

EP 1 052 230 A1

## Description

## BACKGROUND OF THE INVENTION

1. Field of the Invention

The present invention relates to a coloring coating composition for forming a thin film of colored glass gel on the surface of glass for the purpose of recycling colored glass products, and, more particularly, to a coating composition for coloring glass enabling the recycling of colored glass products as non-colored glass by achromatizing the colored glass when it is remelted.

2. Description of the Related Art

In recent years, demands for the recycling of resources have come to be sprung up in view of resource protection and environmental safeguard. Among diversified resources, glass is an excellent material in order to promote resource savings and to recycle since glass contains, as its major component, silicon dioxide used for various purposes and can be reused by recovering it and remelting it as a cullet. Glass products, however, include non-colored products and colored products. Among these glass products, the colored products can be returned to non-colored materials with difficulty by remelting because they contain a variety of transition metals. In light of this, in order to obtain non-colored glass by recycling, it is necessary to classify recovered glass products into non-colored glass products and colored glass products or to recover classified glass products from beginning to remelt only non-colored glass products. Much laborious work is needed to obtain non-colored glass in this manner. This reduces the recycling rate of glass.

Then, as a method for achromatizing colored glass when it is remelted, a method in which glass is coated with a thin film of colored glass gel by using a sol-gel method is proposed. According to this method, glass is coated with a metal alkoxide solution containing an organic dye and is baked to form a thin film of colored glass gel. For instance, there is method in which a metal alkoxide solution containing an organic dye is applied to glass and baked to form a thin film of glass gel (see Japanese Patent Application Laid-Open (JP-A) No. 1-320742). However, in this method, the baking temperature must be 300°C or less on account of the decomposition temperature of the organic dye and hence the resulting thin film of glass becomes a porous one having a greater number of pores, giving rise to a water-resistance problem, namely the problem that a dye is eluted due to the intrusion of water, chemicals and the like from these pores resultantly. Also, since this thin film of glass gel is permeable to oxygen and the like, posing the problem that the color of the dye is faded by oxidation, resulting in poor UV-ray characteristics and the like.

To solve the above problem, proposed is a method in which a coating composition containing dye particles with a particle size larger than a pore of a thin film of glass gel and a dispersant having the ability to adsorb to the dye particles is baked at 300°C or less to form a thin film of glass gel (see JP-A-5-178623). In this method, however, only insufficient water resistance and anti-UV-ray characteristics are obtained. Also, when an organic pigment is used as an organic dye, this method has the problem that the dispersibility and dispersion stability of the pigment are insufficient and satisfactory qualities with respect to fluidity, storage stability, and the glossiness, transparency and clearness of the resulting coating film and tinting strength and the like are not obtained.

Moreover, for improving problems concerning water resistance and UV-resistance characteristics among the aforementioned problems, there is a proposed method in which a metal alkoxide solution containing a UV-ray absorbent made of a specific polymer is applied to a glass bottle and baked to form a thin film of glass gel (see JP-A-9-239311). This method, however, has the same problem as above when an organic pigment is used.

Glass products circulated in the market, particularly those having high utilization for the color of glass bottles include green glass products. Inorganic pigments are used to reproduce green colors including emerald green, namely yellowish green, produced by blending a trivalent chromium oxide and Georgia green, namely more slightly bluish than the above emerald green, produced by blending a trivalent chromium oxide and a bivalent cobalt oxide.

In order to reproduce the hue obtained by these inorganic pigments, by using an organic pigment, it is considered to use a copper phthalocyanine halide type dye. When a glass bottle using this copper phthalocyanine halide is recycled, a cullet is burned at 300°C or more to decompose the dye. If the temperature at this time is less than 800°C, there is a fear as to the creation of a dioxin from copper phthalocyanine halide contained in the coating.

Also, the hue of green color products circulated in the market widely ranges from a yellowish one to a bluish one. Organic pigments such as copper phthalocyanine chloride (C.I. Pigment Green 7) and copper phthalocyanine chlorobromide (C.I. Pigment Green 36) give colors much more bluish than the green color obtained when an inorganic pigment containing a chromium ion is used. Therefore no wide range of hue can be reproduced.

## SUMMARY OF THE INVENTION

It is an object of the present invention to provide a coating composition for coloring glass in a green color, the composition having such characteristics that it has high fluidity and storage stability, possesses desired UV-ray or visible light absorbing characteristics, water resistance, anti-UV-ray characteristics and abrasion resistance when it is applied to glass, is superior in glossiness, transparency, clearness and tinting strength, can reproduce a wide range of hue, can be recycled and reduces the production of harmful substances during recycling.

According to the present invention, there is provided a green coating composition for coloring glass comprising a green colorant formed by color-mixing a blue organic pigment and a yellow organic pigment, a silicon alkoxide compound or a metal alkoxide compound ,and an organic resin.

Further, the present invention provides a green coating composition for coloring glass wherein the organic resin is at least one type selected from the group consisting of an acrylic resin, a polyvinylacetal resin, a cellulose resin and a urethane resin.

Further, the present invention provides the coating composition for coloring glass wherein the blue organic pigment is a phthalocyanine type pigment.

Further, the present invention provides the coating composition for coloring glass wherein the yellow organic pigment is at least one type selected from the group consisting of an isoindoline type pigment, an azo type pigment, an isoindolinone type pigment, a quinophthalone type pigment, an anthrapyrimidine type pigment, a flavanthrone type pigment, a perinone type pigment, a benzimidazolone type pigment, a condensed azo type pigment, a methine type pigment, an azomethine type pigment and a metal complex type pigment.

Further, the present invention provides the coating composition for coloring glass comprises a pigment dispersant.

According to the present invention, it is possible to obtain a recyclable coloring glass by applying the green coating composition to a glass. The coating composition has high fluidity and storage stability, enables an expression of a wide range of hue, offers no danger of producing harmful substances such as a dioxin when it is incinerated. The coating composition also possesses desired light absorption characteristics in the UV range or the visible range, water resistance, anti-UV-ray characteristics and anti-abrasion characteristics and has excellent glossiness, transparency, clearness and tinting strength.

The present disclosure relates to subject matter contained in the Japanese Patent Application No. HEI 11-110253, filed on April 19, 1999, the disclosure of which is expressly incorporated herein by reference in its entirely.

## DETAILED DESCRIPTION OF THE INVENTION

The green coating composition for coloring glass according to the present invention comprises a green colorant formed by color-mixing a blue organic pigment and a yellow organic pigment, a silicon alkoxide compound or a metal alkoxide compound, and an organic resin.

No particular limitation is imposed on the blue organic pigment used in the present invention insofar as it is used for paints or printing inks. Preferable examples of the blue organic pigment may include C.I. Pigments Blue 15, 15:1-6, 16 and 60. Particularly C.I. Pigments 15:1-4 are preferable since these pigments are superior in many characteristics such as light resistance.

There is no particular limitation to the yellow organic pigment used in the present invention insofar as it is used for paints or printing inks. Specific examples of the yellow organic pigment may include isoindoline type pigments, azo type pigments, isoindolinone type pigments, quinophthalone type pigments, anthrapyrimidine type pigments, flavanthrone type pigments, perinone type pigments, benzimidazolone type pigments, condensed azo type pigments, methine type pigments, azomethine type pigments and metal complex type pigments. Particularly, C.I. Pigment Yellow 129 which is a copper azomethine pigment is advantageous on the premise that the dye is decomposed by incineration, because it is superior in many resistances such as light resistance and alkali resistance and includes no chlorine in the skeleton of the pigment.

The green colorant used in the present invention is obtained by compounding the blue organic pigment with the yellow organic pigment. The proportion of the green colorant is preferably 0.01 to 200 parts by weight based on 100 parts by weight of the silicon alkoxide compound or metal alkoxide compound. When the proportion is less than 0.01 parts by weight, sufficient tinting strength cannot be obtained, when the green colorant is used in a proportion exceeding 200 parts by weight, the strength of the resulting thin film decreases.

In the present invention, a pigment dispersant may be used if necessary. Materials used for the pigment dispersant include surfactants, resin type dispersants, amine derivatives containing an organic dye residue or heterocycle residue, coupling agents, chelate type dispersants and lecithin or the like. These may be used either singly or in combinations of two or more.

Examples of the amine derivatives containing an organic dye residue or heterocycle residue may include

compounds represented by the general formulae (1) and (2).

$$P\text{-}[X\text{-}Y\text{-}Z\text{-}N(R^1)R^2]_n \qquad \text{general formula (1)}$$

wherein P represents an organic dye residue or a heterocycle residue, X represents a bivalent bond group comprising a reasonable combination constituted of 2-15 atoms selected from S, C, N, O or H, Y represents a direct bond, -N(R)- (where R represents H, an alkyl group having 1-18 carbon atoms or -Z-N($R^1$)$R^2$) or -O-, Z represents an alkylene group having 1-6 carbon atoms, $R^1$ and $R^2$ respectively represent an alkyl group having 1-18 carbon atoms which may be substituted or are combined to represent a heterocycle which may contain N, O or S and may be substituted, and n denotes an integer from 1 to 3.

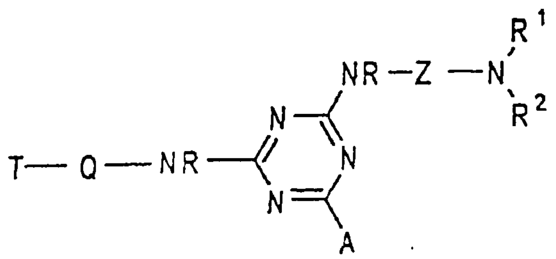

General formula (2)

wherein T represents $-NH_2$, P-X- (where P represents an organic dye residue or a heterocycle residue, X represents a bivalent bond group comprising a reasonable combination constituted of 2-15 atoms selected from S, C, N, O or H), or a compound represented by the general formula(3):

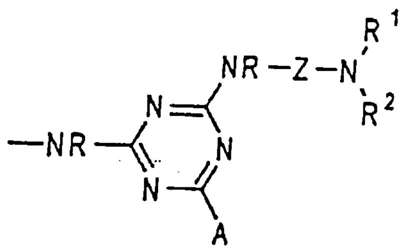

general formula (3)

Q represents a compound represented by the general formula (4):

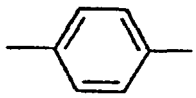

or

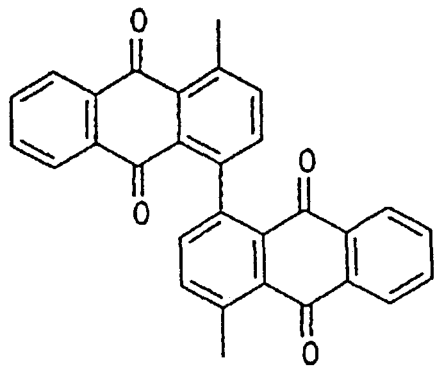

general formula (4)

A represents a hydroxyl group or -N(R)-Z-N($R^1$)$R^2$, R represents H, an alkyl group having 1-18 carbon atoms or -Z-N($R^1$)$R^2$, Z represents an alkylene group having 1-6 carbon atoms, and $R^1$ and $R^2$ respectively represent an alkyl group having 1-18 carbon atoms which may be substituted or are combined to represent a heterocycle which may contain N, O or S and may be substituted.

P in the general formulae (1) and (2) represents an organic dye residue or a heterocycle residue. As the organic dye residue, residual groups such as a phthalocyanine type, insoluble azo type, azo lake type, anthraquinone type, quinacridone type, dioxazine type, diketopyrrolopyrrole type, anthrapyridine type, anthanthrone type, indanthrone type, flavanthrone type, perinone type, perillene type and thioindigo type may be exemplified.

Although these organic dye residues may be optionally selected, it is practically advantageous to use an organic dye residue having the same or similar skeleton and hue as the organic pigment used in the coating composition. An organic dye residue having such a structure not only has a high effect on the non-flocculating ability, non-crystallinity, fluidity and the like but also decreases a variation in hue.

Examples of the heterocycle residue may include thiophene, furan, xanthene, pyrrole, imidazole, isoindoline, isoindolinone, benzimidazolone, indole, quinoline, carbazole, acridine, acridone and anthraquinone and the like. When P in the formulae (1) or (2) is a heterocycle residue, a non-colored or almost uncolored diamine derivative is obtained. The above residues are preferable in the point that these residues can be used for various purposes.

The bond group X in the general formula (1) is a bivalent bond group comprising a reasonable combination constituted of 2-15 atoms selected from S, C, N, O and H. The bond group X is, for example, $-SO_2-$, -CO-, $-CH_2-$, -O-, -COO-, -NH-, -N=N- or combinations of these groups and preferably $-SO_2-$, -CO-, $-CH_2-$ or $-CH_2NHCOCH_2-$.

$R^1$ and $R^2$ in the general formulae (1) and (2) respectively represent an alkyl group having 1-18 carbon atoms. As these alkyl groups, lower alkyl groups such as a methyl group, ethyl group, propyl group and butyl group are preferable. The alkyl group may be branched within a range of the number of carbons up to 18 and may be substituted. Moreover, $R^1$ and $R^2$ may be joined with each other to form a five- or six-membered heterocycle containing N, O or S depending on the situation.

A method of the production of the compound represented by the general formula (1) is as follows. Firstly, a substituent such as $-SO_2Cl$, -COCl, $-CH_2Cl$ or $-CH_2NHCOCH_2Cl-$ is introduced into an organic dye or heterocycle by a well-known method and is reacted with an amine compound having the structure Z-N($R^1$)$R^2$ corresponding to the general formula (1) to obtain an organic dye derivative represented by the general formula (1).

Examples of the amine compound having the structure Z-N($R^1$)$R^2$ include N,N-dimethylaminomethylamine, N,N-dimethylaminoethylamine, N,N-diethylaxninoethylamine, N,N-dibutylaminoethylamine, N,N-diethylaminopropylamine, N,N-dibutylaminopropylamine, N,N-dimethylaminobutylamine, N,N-diethylaminobutylamine, N,N-dipropylaminobutylamine, N,N-dibutylaminobutylamine, N,N-diethylaminohexylamine, N,N-diisobutylaminopentylamine, N,N-methyl-laurylaminopropylamine, N,N-ethyl-hexylaminoethylamine, N,N-distearylaminoethylamine, N,N-dioleylaminoethylamine, N,N-distearylaminobutylamine, N,N-dimethylaminomethanol, N,N-dimethylaminoethanol, N,N-diethylaminoethanol, N,N-dibutylaminomethanol, N,N-dibutylaminoethanol, N,N-dibutylaminopropanol, N,N-diethylaminobutanol, N,N-dioleylbutanol, N-aminoethylpiperidine, N-aminoethyl-4-pipecoline, N-aminoethylmorpholine,

N-aminopropylpiperidine, N-aminopropyl-2-pipecoline, N-aminopropyl-4-pipecoline, N-aminopropylmorpholine, N-aminomethylpiperidine, or N-hydroxymethylpiperidine, N-hydroxyethylpiperidine, N-hydroxypropylpiperidine, N-hydroxyethylpipecoline, N-hydroxypropylpipecoline, N-hydroxymethylpyrrolidine, N-hydroxyethylmorpholine, N-hydroxybutylmorpholine, N,N,N',N'-tetramethyldiethylenetriamine, N-aminopropylmorpholine, and N-aminopropylthiazolidine.

A method of the production of the compound represented by the general formula (2) is as follows. When T in the general formula (2) is P-X-, for example, P is chlorosulfonated according to the usual method, or is chlorinated using thionyl chloride, phosphorous pentachloride or the like if P has a sulfone group or a carboxyl group originally, and thereafter the resulting product is reacted with a compound represented by the following general formula (5), thereby obtaining the object compound.

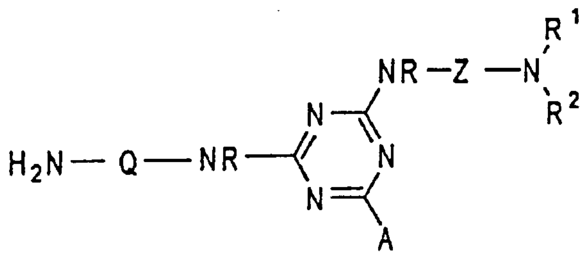

general formula (5)

wherein Q, R, $R^1$, $R^2$ and A have the same meanings as above.

The compound represented by the general formula (5) can be produced, for instance, by reacting a compound, produced by reacting p-amino-acetanilide and cyanuric chloride at the same molar ratio, with the aforementioned amine compound having the structure Z-N($R^1$)$R^2$, and by hydrolyzing the resulting product by using an aqueous hydrochloric acid solution. If one chlorine atom of cyanuric chloride remains unreacted, it is hydrolyzed into a hydroxyl group.

The compound represented by the general formula (5) can also be produced by reacting a compound, produced using p-nitro-aniline in place of p-amino-acetanilide, with amines, followed by a reduction of a nitro group.

The compound represented by the general formula (2) can also be produced by reacting a compound, produced from diaminodianthraquinone and cyanuric chloride, with the aforementioned amine compound having the structure Z-N($R^1$)$R^2$.

Specific examples of amine derivatives containing an organic dye residue or a heterocycle residue which may be used in the present invention are shown in the following.

Compound A

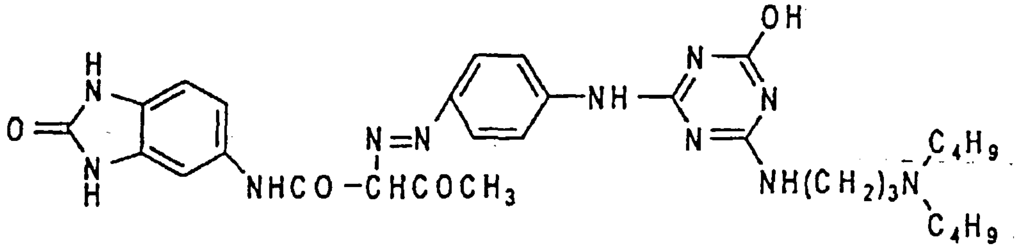

Compound B

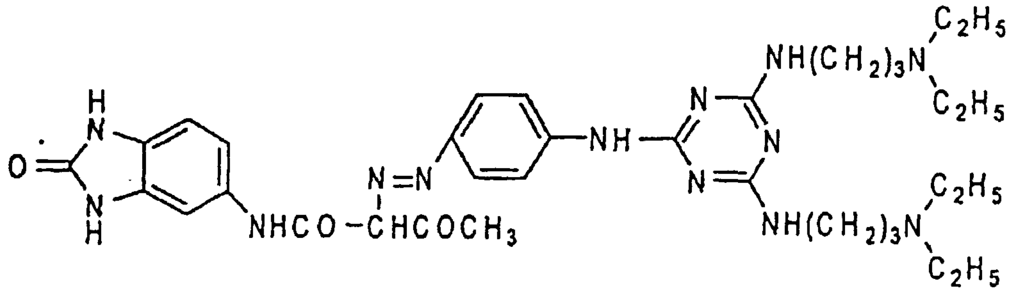

Compound C

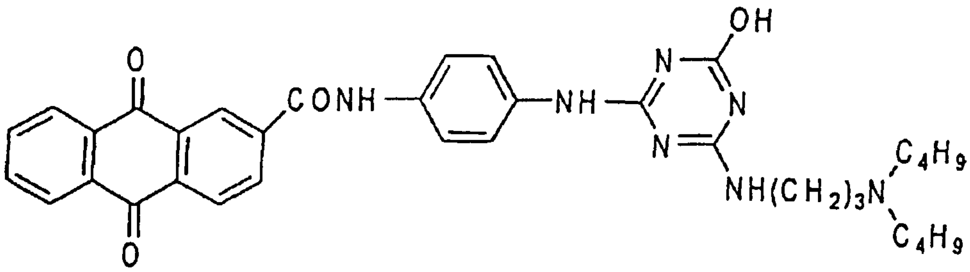

Compound D

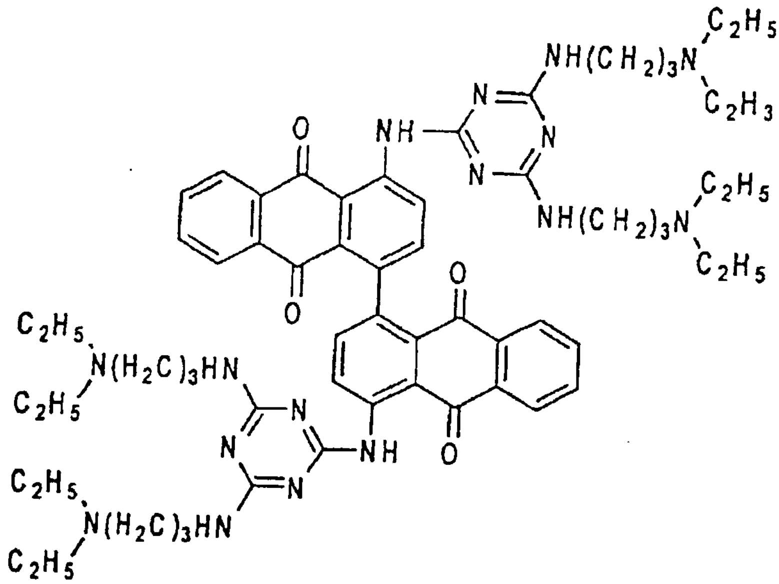

Compound E

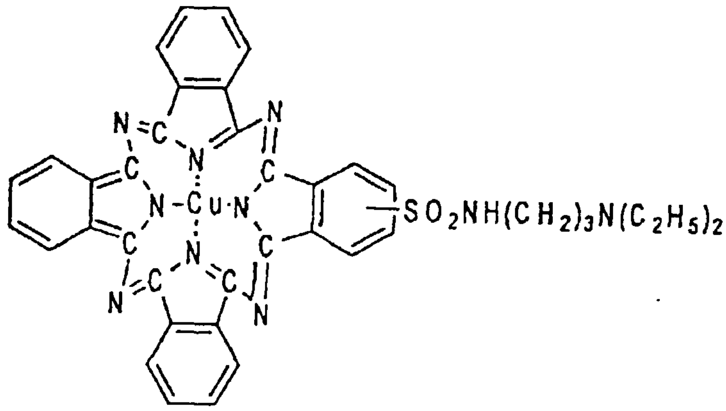

Compound F

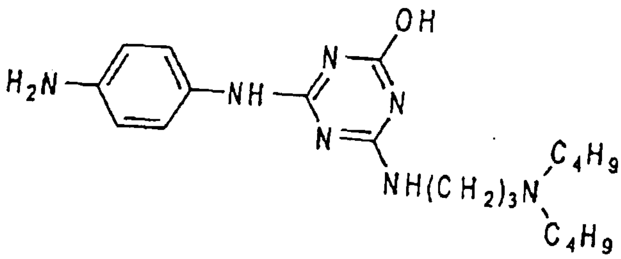

The organic dye residue- or heterocycle residue-containing amine derivative used in the present invention may be used either in a dry powder form when the organic pigment is dispersed or in the condition that it is mixed in the organic pigment in advance, to obtain a pigment composition. When the organic dye residue- or heterocycle residue-containing amine derivative is dissolved or dispersed in a solvent or an aqueous mineral acid solution, the pigment composition may be obtained by adding the organic dye residue- or heterocycle residue-containing amine derivative to a solution or slurry of a solvent containing the organic pigment to adsorb the amine to the surface of the organic pigment and by drying the resulting product as required after filtration. The pigment composition may also be obtained by a method in which a powder, solution or dispersion of the organic dye residue- or heterocycle residue-containing amine derivative is added, particularly during coupling in the case of using an azo type pigment or during a pigmentation step such as a salt milling process or a sulfuric acid dissolution process in the case of using a phthalocyanine type, quinacridone type or dioxazine type pigment, to adsorb the derivative to the surface of the pigment, followed by drying as required after filtration.

The resin type dispersant used in the present invention is high molecular copolymerized products produced by combining a basic material with a polyester compound or an acrylic polymer and having a weight average molecular weight of 1,000 to 100,000 and an amine value of 10 to 200 mgKOH/g. These resin type dispersants are disclosed, for example, in JP-A-60-166318, JP-A-61-174939 and JP-A-46-7294. When the weight average molecular weight of the high molecular copolymerized product is less than 1,000, only insufficient steric hindrance is obtained, reducing the dispersing effect. On the other hand when the weight average molecular weight exceeds 100,000, this effects flocculation on the contrary. Therefore the amount out of the above-defined range is undesirable. Such a resin type dispersant may be a commercially available one and Solsperse 24000 and Solsperse 20000 (manufactured by Zeneca K.K.) and Disperbyk-160, Disperbyk-161, Disperbyk-162, Disperbyk-163 and Disperbyk-182 (manufactured by BYK-CHEMIE) may be exemplified.

As the surfactant in the present invention, an anionic, nonionic, cationic or amphoteric surfactant is preferably used.

Examples of the anionic surfactants may include a fatty acid salt, alkyl sulfate, alkylaryl sulfonate, alkylnaphthalene sulfonate, dialkyl sulfonate, dialkylsulfosuccinate, alkyldiaryl ether disulfonate, alkyl phosphate, polyoxyethylenealkyl ether sulfate, polyoxyethylenealkylaryl ether sulfate, naphthalenesulfonic acid/formalin condensate, polyoxyethylenealkyl phosphate, glycerol borate fatty acid ester and polyoxyethyleneglycerol fatty acid ester.

Examples of the nonionic surfactants may include a polyoxyethylenealkyl ether, polyoxyethylenealkyl aryl ether, polyoxyethyleneoxypropylene block copolymer, sorbitan fatty acid ester, polyoxyethylenesorbitan fatty acid ester, polyoxyethylenesorbitol fatty acid ester, glycerin fatty acid ester, polyoxyethylene fatty acid ester, polyoxyethylenealkylamine and fluorine type or silicon type nonionic surfactants.

Examples of the cationic surfactants include alkylamine salts, quaternary ammonium salts, alkylpyridium salts and alkyl imidazolium salts.

As the amphoteric surfactants, alkyl betaine, alkylamine oxide and phosphatidyl choline and the like may be exemplified.

As the coupling agent and chelate type dispersant, silane type, titanate type and aluminum type coupling agents and chelate type dispersants are preferably used.

Examples of the silane type may include vinyltrimethoxysilane, vinyltriethoxysilane, N-(2-aminoethyl)-3-aminopropyltrimethoxysilane, 3-aminopropyltriethoxysilane. 3-glycidoxypropyltrimethoxysilane, 2-(3,4-epoxycyclohexyl)ethyltrimethoxysilane, 3-methacryloxypropyltrimethoxysilane and 3-mercaptopropyltrimethoxysilane and the like.

Examples of the titanate type may include isopropyltrilsostearoyl titanate, isopropyltris(dioctylpyrophosphate) titanate, isopropyltri(N-aminoethyl-aminoethyl) titanate, tetraoctylbis(ditridecylphosphite) titanate, tetra(2,2-diallyloxymethyl-1-butyl)bis(ditridecyl)phosph ite titanate, bis(dioctylpyrophosphate)oxyacetate titanate, isopropyltridodecylbenzenesulfonyl titanate and isopropyltricumylphenyl titanate and the like.

As the aluminum type, acetoalkoxyaluminum diisopropylate, ethylacetate aluminum diisopropylate, aluminum tris(ethylacetoacetate) and aluminum tris(acetylacetonate) and the like may be exemplified.

The coating composition for coloring glass according to the present invention is produced in the following method. Specifically, a concentrated dispersion of a pigment is formed either by adding a solvent to the organic pigment, pigment dispersant and the organic resin and dispersing the mixture using a sand grinder mill, or by dispersing the above components except for the solvent using a roll mill followed by making the milled product into solid chips. Then, a silicon alkoxide compound or a metal alkoxide compound and additives are compounded in the concentrated dispersion of a pigment. In the above method, the process using a roll mill to form solid chips is desirable because the organic pigment can be decomposed into primary particles by high shearing force and the organic pigment can be prevented from refloculating by the presence of the pigment dispersant.

When the organic dye residue- or heterocycle residue-containing amine derivative is used as the pigment dispersant in the present invention, the organic pigment, the organic resin and the amine derivative may be only mixed when they are dispersed using a roll mill. However, if these components have been in a molten state by mixing under heat in advance prior to the dispersion using a roll mill, not only the affinity between the above amine derivative and the organic resin is improved but also the amine derivative is mixed with the organic pigment uniformly and rapidly, improving productivity.

When the pigment dispersant is used in the present invention, the amount of the pigment dispersant is preferably 0.1 to 30 parts by weight based on 100 parts by weight of the organic pigment. When the amount is less than 0.1 parts by weight, no effect is obtained. Even if the pigment dispersion is used in an amount exceeding 30 parts by weight, an effect enough for the amount to be used is not obtained.

Preferably the coating composition for coloring glass according to the present invention contains a polymerizable organic group-containing alkoxysilane compound.

Examples of the polymerizable organic group-containing alkoxysilane compound include compounds represented by the following general formula (6).

$$R^4pSi(OR^3)_{4-p} \qquad \text{general formula (6)}$$

wherein $R^4$ represents a polymerizable organic group, $R^3$ represents an alkyl group having 1-4 carbon atoms and p denotes an integer from 1 to 3.

The compound represented by the general formula (6) is alkoxysilane compounds having the polymerizable organic group $R^4$. The polymerizable organic groups are organic groups having an unsaturated double bond or a ring-openable cyclic group and properties of repeating the cleavage of this bond or group and addition and of repeating the addition polymerization.

Examples of such a polymerizable organic group may include vinyl groups, 2-propenyl groups, isopropenyl groups, acryloyl groups, methacryloyl groups and γ -methacryloxypropyl groups as the groups having a polymerizable unsaturated double bond and cyclic ether groups, especially, cyclic monoether groups, lactone groups, lactam groups, acid anhydrides and isocyanate groups (and hydroxyl groups) as the groups having a ring-openable cyclic group. Among these groups, vinyl groups or γ-methacryloxypropyl groups are preferable.

Among these compounds having such a structure, specifically vinyltrimethoxysilane, vinyltriethoxysilane and γ-methacryloxypropyltrimethoxysilane are preferable. Plural compounds among these compounds may be combined upon use.

The coating composition of the present invention may be dissolved or dispersed in a proper solvent. The solvent is selected according to the type of compound and type of pigment to be used or dispersion condition. Generally, ethanol, propanol and butanol are exemplified as the solvent. Here, butanol is preferable in view of the dispersibility of a pigment and ethanol is preferable in the case of making a glassy coating of frost style.

In the coating composition of the present invention, the ratio of the silicon alkoxy compound or the metal alkoxy compound to the polymerizable organic group-containing alkoxysilane compound is preferably 15-80 mol%/85-20 mol%.

Moreover, a silicon alkoxide compound or metal alkoxide compound modified by an organic functional group and/or an organic resin may be used. This can make the film thickness of the coating thick, impart flexibility and various resistances to a thin film of a glass gel and improve the storage stability of the coating composition. Examples of materials used in such a modification include a silane coupling agent, acrylic resin and the like, polyester resin and epoxy resin. The modification can be attained by condensation-reacting each of these compounds with a silicon or metal alkoxide compound by using a known method.

Examples of a solvent used in the above reaction may include almost all alcohols such as methanol, ethanol, isopropyl alcohol, butanol, pentanol, methoxyethanol, ethoxyethanol and propoxyethanol. Also, an organic acid, inorganic acid, amine, coupling agent or the like may be used as a catalyst.

No particular limitation is imposed on the organic resin used in the present invention insofar as it is compatible with the metal alkoxide compound and has the ability of dispersing a pigment. However, as the organic alkoxide compound, those having a specific polar group are desirable.

The polar group portion condensation-reacts in part with an -OH group and the like of the metal alkoxide compound, whereby the organic resin is cross-linked three-dimensionally with the metal alkoxide compound. Also the organic resin has an affinity also to the organic pigment and pigment dispersant resultantly. Hence the coating film has also flexibility while it has high hardness, heat resistance, chemical resistance and minuteness. Also, the presence of the polar group ensures superior dispersibility of the organic pigment and high storage stability of the coating composition.

As the polar group, an -OH group, -COOH group or -NCO group is preferred. Though there is no particular limitation to the structure of the organic resin, an acrylic resin, polyvinylacetal resin, cellulose resin or urethane resin is preferable as the organic resin in view of the compatibility with a solution of the metal alkoxide compound and the dispersibility of the organic pigment. The molecular weight of the organic resin is preferably 500-100,000 and more preferably 1,000-50,000 in terms of number average.

The proportion of the organic resin used in the present invention is 0.1 to 150 parts by weight based on 100 parts by weight of the organic pigment. When the proportion is less than 0.1 parts by weight, no effect is obtained

whereas when the proportion exceeds 150 parts by weight, the strength of the thin film is reduced.

An organic UV-ray absorber in the present invention is used for the purpose of not only improving the anti-UV-ray characteristics of the organic pigment but also preventing the decomposition of a dye caused by UV-rays when a glass substrate is coated with the coating composition. No particular restriction is imposed on the structure of the absorber. As the organic UV-ray absorber, concretely a benzotriazole type and benzophenone type are exemplified.

Examples of the benzotriazole type UV-ray absorber may include 2-(2-hydroxyphenyl-3,5-di-t-butylphenyl)benzotriazole, 2-(2-hydroxy-5-methylphenyl)benzotriazole, 2-(2-hydroxy-5-t-butylphenyl)benzotriazole, 2-hydroxyphenyl-5-chlorobenzotriazole, 2-(2-hydroxy-3,5-di-t-butylphenyl)-5-chlorobenzotriazole, 2-{2-hydroxy-3-(3,4,5,6-tetrahydrophthalimidomethyl)-5-m ethylphenyl)benzotriazole and 2-(2-hydroxy-3,5-dinonylphenyl)benzotriazole and the like.

Examples of the benzophenone type UV-ray absorber may include 2,4-dihydroxybenzophenone, 2-hydroxy-4-methoxybenzophenone, 2-hydroxy-4-octoxybenzophenone, 2,2'-dihydroxy-4-methoxybenzophenone, 2,2'-dihydroxy-4,4'-dimethoxybenzophenone and 2-hydroxy-4-methoxy-5-sulfobenzone and the like.

When the organic type UV-light absorber is used in the present invention, its amount is 0.01 to 5 parts by weight based on 100 parts by weight of a coating solution. If the amount is less than 0.01 parts by weight, no effect is obtained. Even if the organic type UV-light absorber is used in amount exceeding 5 parts by weight, not only an effect enough for the amount to be used is not obtained but also this has such an adverse effect that the absorber elutes from the thin film depending upon the condition.

In the present invention, the ratio of the amount of total solids (the organic pigment, pigment dispersant, metal alkoxide compound, organic resin and organic type UV-light absorber) to the total amount of the coating solution is preferably 0.1 to 50% by weight. When the ratio is less than 0.1% by weight, no practical film thickness is obtained whereas when the ratio exceeds 50% by weight, a problem concerning the stability of the coating solution is posed.

Other additives may be added as far as the object of the present invention is not impaired. The above other additives include, for example, a cross-linking agent. hydrolysis-preventing agent and viscosity regulator and the like.

The coating composition for coloring glass according to the present invention may comprise a friction resistance-reducing agent which reduces friction resistance, especially sliding friction, of the formed coating. In the case where the friction resistance-reducing agent is compounded in the coating, the surface of the cured coating becomes smooth and the hardness of the coating is properly controlled. These changes in the qualities of the coating, including other effects decrease the coefficient of sliding friction resistance of the surface of the coating. Therefore, if the friction resistance-reducing agent is compounded in the coating composition for forming a glassy coating according to the present invention to coat the substrate, the occurrence of abrasions on the coating when the coating is in contact with other materials is reduced.

As the frictional resistance-reducing agent which may be used in the present invention, any one of those which don't adversely affect the effect of the present invention may be used. Given as examples of the friction resistance-reducing agent are modified polysiloxane types, more specifically, S030 (trademark, manufactured by Defra in Germany).

Though no particular limitation is imposed on the coating method for forming a thin film of colored glass gel on the surface of a glass substrate such as bottle, the glass substrate is coated with the coating liquid composition of the present invention by using a coating apparatus such as a spin coater, roll coater, dip coater, foil coater or bar coater such that the film thickness after being baked is 0.1 to 5μm and more preferably 0.5 to 3μm. When the film thickness is less than 0.1μm, the tinting strength is insufficient whereas when the film thickness exceeds 5μm, there is the case where cracks, white turbidity and color spots and the like are caused. The thin film of colored glass gel which is formed on the surface of a glass substrate has effects of improving the abrasion resistance and impact resistance of the glass substrate itself by preventing the abrasion of the glass substrate itself. However, if the thickness is less than 0.1μm, such an effect cannot be largely expected.

The coating is dried and baked, after it is applied, to form a thin film of colored glass gel on the surface of the glass substrate. The baking temperature is preferably 300°C or less in consideration of the decomposition of the organic pigment and organic dye derivative. The thin film of colored glass gel may be formed by a method other than the above method. For example, light is applied to a coating agent containing a photopolymerization initiator to cause a polymerization reaction thereby curing the coating. The applied light is usually visible light or ultraviolet light and preferably ultraviolet light. Each light source of these lights is optional and may be a mercury lamp, xenon discharge tube, hydrogen discharge tube, black light lamp, various laser light sources or like light sources.

Although the coating can be cured by only one of irradiation with light and heating treatment, it is preferable to combine the both to shorten the time required for heat treatment and to develop higher hardness.

## EXAMPLES

The present invention will be explained in detail by way of examples.

**(Examples 1-3)**

15.0 parts of Lionol Blue FG7351 (manufactured by Toyo Ink Mfg. Co., Ltd., C.I. Pigment Blue 15:3), 6.0 parts of a polyvinylacetal resin, 78.2 parts of 1-butanol and 0.8 parts of a pigment dispersant (Compound E) were sufficiently dispersed using a sand grinder mill. 16.7 Parts of the resulting blue dispersion composition was mixed with 6.5 parts of tetraethoxysilane, 1.2 parts of water, 1.0 part of nitric acid, 2.0 parts of methanol, 18.0 parts of ethanol, 2.0 parts of 2-propanol and 52.6 parts of 1-butanol in a mixer to obtain a blue coating composition.

150 parts of Irgazin yellow 5GT (manufactured by Ciba-Geigy, C.I. Pigment Yellow 129), 6.0 parts of a polyvinylacetal resin, 78.2 parts of 1-butanol and 0.8 parts of a pigment dispersant (Compound C) represented by the structural formula described below were sufficiently dispersed using a sand grinder mill. 16.7 Parts of the resulting yellow dispersion composition was mixed with 6.5 parts of tetraethoxysilane, 12 parts of water, 1.0 part of nitric acid, 2.0 parts of methanol, 18.0 parts of ethanol, 2.0 parts of 2-propanol and 52.6 parts of 1-butanol in a mixer to obtain a yellow coating composition.

The above yellow coating composition and blue coating composition were mixed in the ratios shown in Table 1 and mixed with stirring using a mixer to obtain a green coating composition.

Table 1

| Coating composition | Example 1 | Example 2 | Example 3 |
|---|---|---|---|
| Blue | 10 parts | 20 parts | 30 parts |
| Yellow | 90 parts | 80 parts | 70 parts |

**(Example 4)**

16.7 Parts of each of the blue dispersion composition and yellow dispersion composition used in Examples 1-3 was mixed with 1.3 parts of tetraethoxysilane, 1.3 parts of Ethyl Silicate 40 (trademark, manufactured by Mitsubishi Chemical Corporation), 3.9 parts of vinyltrimethoxysilane, 1.2 parts of water, 1.0 part of nitric acid, 2.0 parts of methanol, 18.0 parts of ethanol, 2.0 parts of 2-propanol and 52.6 parts of 1-butanol using a mixer to obtain a blue coating composition and a yellow coating composition.

80 Parts of the above yellow coating composition and 20 parts of the above blue coating composition were mixed with stirring in a mixer to obtain a green coating composition.

Next, the transparency of the coating composition of the present invention when it was made into a thin film is shown using the haze factor. From the fact that each thin film formed using the coating compositions has a low haze factor as shown in Table 2, it is understood that the thin film according to the present invention has sufficient transparency.

Each haze of the coating compositions prepared in Examples 1-4 was determined by the following procedures.

Each coating composition was dripped on a 50-mm-long, 50-mm-wide and 1.7-mm-thick soda glass and thereafter an excess coating composition was splashed away using a spin coater. Then the soda glass was allowed to stand for 10 minutes and then heated at 200°C for 20 minutes to decrease the film thickness to about 1.5 mm thereby forming test specimens for measuring the haze factor. Each haze (= diffuse transmission factor/total transmission factor × 100, the total transmission factor = parallel transmission factor + diffuse transmission factor ) of these test specimen was measured three times every test specimen by using a color difference/turbidity measuring meter (COH-300A Model, manufactured by Nippon Denshoku Kogyo) and the average of the values measured three times was determined as the haze factor.

Table 2

| Examples | Haze factor |
|---|---|
| 1 | 2.7 |
| 2 | 3.0 |
| 3 | 3.5 |
| 4 | 2.5 |

It is further understood by those skilled in the art that the foregoing description is a preferred embodiment of the disclosed device and that changes and modifications may be made in the invention without departing from the sprit and scope thereof.

## Claims

1. A coating composition for coloring glass, comprising a green colorant formed by color-mixing a blue organic pigment and a yellow organic pigment, a silicon alkoxide compound or a metal alkoxide compound, and an organic resin.

2. The coating composition for coloring glass according to claim 1, wherein the organic resin is at least one type selected from the group consisting of an acrylic resin, a polyvinylacetal resin, a cellulose resin and a urethane resin.

3. The coating composition for coloring glass according to claim 1 or 2, wherein the blue organic pigment is a phthalocyanine type pigment .

4. The coating composition for coloring glass according to claim 1, wherein the yellow organic pigment is at least one type selected from the group consisting of an isoindoline type pigment, an azo type pigment, an isoindolinone type pigment, a quinophthalone type pigment, an anthrapyrimidine type pigment, a flavanthrone type pigment, a perinone type pigment, a benzimidazolone type pigment, a condensed azo type pigment, a methine type pigment, an azomethine type pigment and a metal complex type pigment.

5. The coating composition for coloring glass according to claim 2, wherein the yellow organic pigment is at least one type selected from the group consisting of an isoindoline type pigment, an azo type pigment, an isoindolinone type pigment, a quinophthalone type pigment, an anthrapyrimidine type pigment, a flavanthrone type pigment, a perinone type pigment, a benzimidazolone type pigment, a condensed azo type pigment, a methine type pigment, an azomethine type pigment and a metal complex type pigment.

6. The coating composition for coloring glass according to claim 3, wherein the yellow organic pigment is at least one type selected from the group consisting of an isoindoline type pigment, an azo type pigment, an isoindolinone type pigment, a quinophthalone type pigment, an anthrapyrimidine type pigment, a flavanthrone type pigment, a perinone type pigment, a benzimidazolone type pigment, a condensed azo type pigment, a methine type pigment, an azomethine type pigment and a metal complex type pigment.

7. The coating composition for coloring glass according to claim 1,2,3,4,5 or 6, wherein the coating composition further comprises a pigment dispersant.

8. A colored glass product, wherein the coating composition for glass according to claim 1 is coated on a surface of glass substrate.

9. The colored glass product according to claim 8, wherein the glass product is a glass bottle.

European Patent Office

# EUROPEAN SEARCH REPORT

Application Number
EP 00 10 8471

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int.Cl.7) |
| X | US 5 667 888 A (YOSHIDA AKIHIKO ET AL) 16 September 1997 (1997-09-16)<br>* column 1, line 14 - line 22 *<br>* column 6, line 21 - column 7, line 10 *<br>example of organic pigment h)<br>* column 9, line 30 - line 47 *<br>* column 9, line 50 - line 67 *<br>* example 8 * | 1-9 | C03C17/00 |
| P,Y | EP 0 955 275 A (TOYO INK MFG CO) 10 November 1999 (1999-11-10)<br>* the whole document * | 1-9 | |
| Y,D | PATENT ABSTRACTS OF JAPAN vol. 1998, no. 01, 30 January 1998 (1998-01-30) & JP 09 239311 A (ASAHI BEER PACKS:KK;IPPOSHA OIL IND CO LTD; TEIKOKU CHEM IND CORP LTD), 16 September 1997 (1997-09-16)<br>* abstract * | 1-9 | TECHNICAL FIELDS SEARCHED (Int.Cl.7) |
| Y | EP 0 893 737 A (JSR CORP) 27 January 1999 (1999-01-27)<br>* page 2, line 10 *<br>Comparartive example 4 | 1-9 | C03C |
| A | US 5 232 781 A (INO JUICHI ET AL) 3 August 1993 (1993-08-03)<br>* column 33, line 33 - column 34, line 36 *<br>* column 36, line 21 - column 38, line 21 *<br>* examples 1-12,51-73,82,91-93 * | 1-9 | |
| | -/-- | | |

The present search report has been drawn up for all claims

| Place of search | Date of completion of the search | Examiner |
|---|---|---|
| MUNICH | 13 September 2000 | Somann, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 00 10 8471

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PATENT ABSTRACTS OF JAPAN vol. 014, no. 043 (C-0681), 26 January 1990 (1990-01-26) & JP 01 275448 A (UNIE-KU T-PU:KK), 6 November 1989 (1989-11-06) * abstract * | 1-9 | |

TECHNICAL FIELDS SEARCHED (Int.Cl.7)

The present search report has been drawn up for all claims

| Place of search | Date of completion of the search | Examiner |
|---|---|---|
| MUNICH | 13 September 2000 | Somann, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT ON EUROPEAN PATENT APPLICATION NO.** EP 00 10 8471

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2000

| Patent document cited in search report | Publication date | Patent family member(s) | Publication date |
|---|---|---|---|
| US 5667888 A | 16-09-1997 | JP 4001602 A | 07-01-1992 |
| | | JP 2825926 B | 18-11-1998 |
| | | JP 4002635 A | 07-01-1992 |
| | | DE 69124410 D | 13-03-1997 |
| | | DE 69124410 T | 10-07-1997 |
| | | EP 0452922 A | 23-10-1991 |
| EP 0955275 A | 10-11-1999 | JP 2000026803 A | 25-01-2000 |
| JP 09239311 A | 16-09-1997 | NONE | |
| EP 0893737 A | 27-01-1999 | JP 11044815 A | 16-02-1999 |
| | | JP 11064628 A | 05-03-1999 |
| | | JP 11072615 A | 16-03-1999 |
| | | JP 11100529 A | 13-04-1999 |
| | | EP 1033625 A | 06-09-2000 |
| | | EP 1033626 A | 06-09-2000 |
| US 5232781 A | 03-08-1993 | JP 2743489 B | 22-04-1998 |
| | | JP 3033279 A | 13-02-1991 |
| | | JP 3033280 A | 13-02-1991 |
| | | JP 3033281 A | 13-02-1991 |
| | | JP 2055958 C | 23-05-1996 |
| | | JP 3066764 A | 22-03-1991 |
| | | JP 7094615 B | 11-10-1995 |
| | | JP 2548394 B | 30-10-1996 |
| | | JP 3080204 A | 05-04-1991 |
| | | JP 2598521 B | 09-04-1997 |
| | | JP 3080203 A | 05-04-1991 |
| | | JP 2027538 C | 26-02-1996 |
| | | JP 3093651 A | 18-04-1991 |
| | | JP 7061882 B | 05-07-1995 |
| | | JP 2639129 B | 06-08-1997 |
| | | JP 3100184 A | 25-04-1991 |
| | | JP 2027539 C | 26-02-1996 |
| | | JP 3103340 A | 30-04-1991 |
| | | JP 7061883 B | 05-07-1995 |
| | | CN 1046544 A,B | 31-10-1990 |
| | | DE 69010537 D | 18-08-1994 |
| | | DE 69010537 T | 01-12-1994 |
| | | EP 0391226 A | 10-10-1990 |
| | | JP 2726732 B | 11-03-1998 |
| | | JP 3050111 A | 04-03-1991 |
| | | KR 160125 B | 16-11-1998 |
| | | US 5114760 A | 19-05-1992 |
| | | CA 2013660 A | 29-12-1990 |

EPO FORM P0459

For more details about this annex : see Official Journal of the European Patent Office, No. 12/82

**ANNEX TO THE EUROPEAN SEARCH REPORT ON EUROPEAN PATENT APPLICATION NO.** EP 00 10 8471

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2000

| Patent document cited in search report | Publication date | Patent family member(s) | Publication date |
|---|---|---|---|
| JP 01275448 A | 06-11-1989 | NONE | |

EPO FORM P0459

For more details about this annex : see Official Journal of the European Patent Office, No. 12/82